# FASCICULE DE BREVET EUROPEEN

(11) **EP 2 670 229 B1**
(45) Date de publication et mention de la délivrance du brevet: **03.06.2015**
(21) Numéro de dépôt: 12705318.9
(22) Date de dépôt: 11.01.2012
(51) Int. Cl.: A01G 27/00

(54) **DISPOSITIF D'ARROSAGE DESTINÉ A ÉQUIPER UN RÉCIPIENT DE CULTURE, COMPORTANT UN RÉSERVOIR INDÉPENDANT**
BEWÄSSERUNGSVORRICHTUNG ZUM EINSATZ IN EINEN ZUCHTBEHÄLTER MIT EINEM UNABHÄNGIGEN RESERVOIR
WATERING DEVICE INTENDED TO BE FITTED TO A GROWING CONTAINER, COMPRISING AN INDEPENDENT RESERVOIR

(30) Priorité: 04.02.2011 FR 1150911
(43) Date de publication de la demande: 11.12.2013
(73) Titulaire: Aquasolo Systems, 69003 Lyon (FR)
(72) Inventeur: BALESTRA, Philippe, F-92300 Levallois (FR); CANIN, Bruno, F-01250 Saint-just (FR)
(74) Mandataire: Chevalier, Renaud Philippe
(86) Numéro de dépôt international: PCT/FR2012/050070
(87) Numéro de publication internationale: WO 2012/104512

(56) Documents cités:
- EP-A1- 0 195 542
- EP-A1- 0 467 789
- FR-A1- 2 322 533
- FR-A1- 2 827 120
- GB-A- 2 378 633

## Description

L'invention concerne un dispositif d'arrosage de plantes destiné à équiper un récipient de culture.

La culture de plantes en milieu urbain ou à l'intérieur de bâtiments est généralement réalisée dans des récipients de culture, tels que des pots de section circulaire ou rectangulaire. L'arrosage des plantes ainsi cultivées doit être régulier et réalisé avec une attention particulière. Pour faciliter et espacer cet arrosage il est connu d'utiliser des récipients intégrant un dispositif d'arrosage, tel qu'une réserve d'eau.

Lorsqu'un récipient de culture n'intègre pas un tel dispositif, il est connu d'utiliser ponctuellement un dispositif d'arrosage, tel que celui décrit dans le document EP 1406480. Un tel dispositif se présente sous la forme d'un système de diffusion d'eau présentant des moyens de connexion à une bouteille d'eau. Un autre dispositif est connu de GB2378633 A. Ainsi, lors d'une période d'absence prolongée empêchant tout arrosage, le dispositif est connecté à une bouteille remplie d'eau. Le dispositif ainsi pourvu est ensuite placé dans le récipient de culture en contact avec la terre. De cette manière, le dispositif va permettre, tout au long de la période d'absence, une alimentation progressive et continue de la plante en eau à partir de l'eau de la bouteille.

Néanmoins, si un tel dispositif permet un arrosage de la plante lors d'une période d'absence ponctuelle, il n'est pas adapté pour une installation permanente. En effet, un tel dispositif ne permet pas une installation intégrée et esthétique en raison de la présence nécessaire d'une bouteille d'eau dépassant du récipient de culture.

La présente invention vise à remédier à cet inconvénient.

Un des buts de l'invention est donc de fournir un dispositif d'arrosage équipant de façon permanente et intégrée un récipient de culture non pré-équipé de dispositif d'arrosage.

A cet effet, l'invention concerne un dispositif d'arrosage de plantes destiné à équiper un récipient de culture selon la revendication 1

L'utilisation d'une enveloppe extérieure au moins partiellement enterrée en combinaison avec un réservoir d'eau qui y est logé permet un équipement intégré et esthétique d'un récipient de culture. En effet, un tel dispositif pouvant être partiellement enterré, le réservoir d'eau ne dépasse pas du récipient de culture.

De manière avantageuse, le réservoir d'eau présente une forme complémentaire de celle du logement de l'enveloppe extérieure.

Une telle complémentarité de formes entre le réservoir d'eau et l'enveloppe permet de fournir un dispositif d'arrosage compact.

L'enveloppe présente une paroi latérale qui, reliant les extrémités supérieure et inférieure, présente une portion courbée possédant une section horizontale en forme générale d'arc de cercle.

Une telle portion courbée permet une installation du dispositif dans un récipient de culture présentant une section horizontale circulaire ou ovale, la portion courbée pouvant être disposée en appui sur la paroi interne du récipient de culture.

L'enveloppe présente une paroi latérale qui, reliant les extrémités supérieure et inférieure, ladite paroi latérale présente une portion comportant au moins deux surfaces latérales, formant approximativement un angle de 90° l'une par rapport à l'autre.

De telles surfaces formant un angle approximatif de 90° permettent une installation du dispositif dans un récipient présentant une section horizontale rectangulaire ou carrée, le dispositif pouvant être placé au niveau d'un angle du récipient de culture, chaque surface en contact avec l'un des cotés formant l'angle du récipient.

Les surfaces latérales présentent chacune un bord opposé à l'angle formé par lesdites surfaces, ces deux bords étant reliés par la portion courbée.

Une telle combinaison permet une installation du dispositif dans des récipients de culture présentant aussi bien une section horizontale de forme circulaire que de forme carrée ou rectangulaire.

De manière avantageuse, le système de diffusion d'eau présente une portion poreuse, par exemple en céramique.

Une telle portion poreuse permet un écoulement de l'eau qui soit continu pour une alimentation régulière de la plante.

Avantageusement, portion poreuse présente une forme générale de cône.

Une telle portion en cône permet une diffusion optimisée de l'eau dans la terre.

Préférentiellement, le premier et le deuxième moyens de fixation du dispositif de diffusion d'eau sont amovibles.

De tels moyens de fixation amovible permettent de changer le système de diffusion d'eau pour adapter le dispositif au besoin d'arrosage de la ou des plantes reçues dans le récipient de culture équipé.

De manière avantageuse, les premier et deuxième moyens de fixation comportent respectivement une partie tubulaire filetée ménagée autour de l'orifice du réservoir d'eau et une partie tubulaire filetée ménagée sur le système de diffusion d'eau.

De tels premier et second moyens de fixation permettent une fixation amovible du dispositif de diffusion d'eau sur le réservoir d'eau qui soit robuste et de faible coût.

Avantageusement, l'enveloppe présente une section horizontale dont la surface diminue sensiblement entre les extrémités supérieure et inférieure.

Une telle section facilite l'enfoncement du dispositif lors de sa mise en place dans le récipient de culture.

Préférentiellement, l'enveloppe présente des nervures de rigidification orientées sensiblement verticalement.

De telles nervures permettent une rigidification de l'enveloppe, qui peut ainsi être réalisée en matière synthétique de faible épaisseur.

De manière avantageuse, le réservoir d'eau présente une extrémité ouverte et un couvercle agencé pour fermer cette extrémité ouverte.

Une telle extrémité ouverte permet de faciliter le remplissage du réservoir d'eau.

De toute façon l'invention sera bien comprise à l'aide de la description qui suit en référence au dessin schématique annexé représentant, à titre d'exemple non limitatif, une forme d'exécution de ce dispositif d'arrosage.
La figure 1 en est une vue en perspective;
la figure 2 en est une vue de coté en coupe,
la figure 3 en est une vue en perspective éclatée,
la figure 4 est une vue de dessus d'un récipient de culture de section circulaire équipé d'un dispositif d'arrosage,
la figure 5 est une vue de dessus d'un récipient de culture de section carrée équipé d'un dispositif d'arrosage.

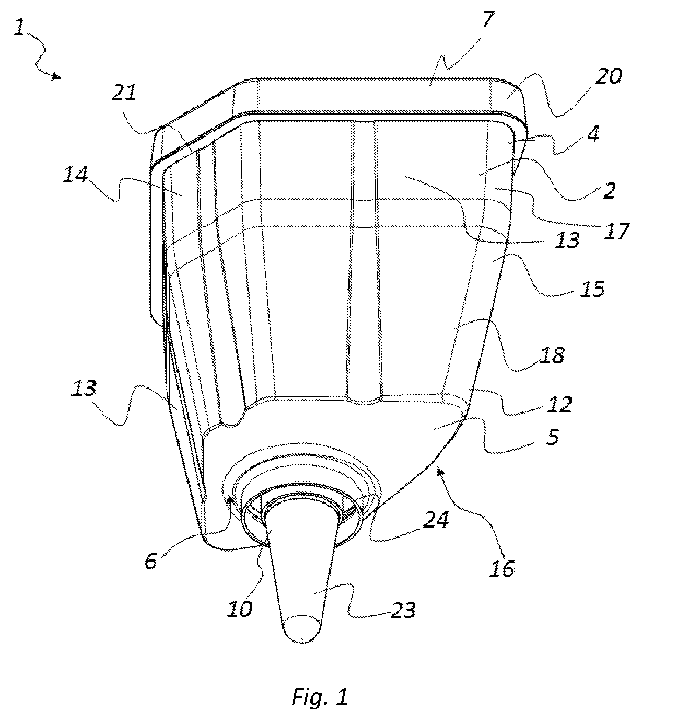

La figure 1 illustre un dispositif d'arrosage 1 destiné à équiper un récipient de culture R, tel qu'un pot.

Ce dispositif 1 comprend :
- une enveloppe 2 extérieure délimitant un logement 3 et présentant une extrémité supérieure 4 ouverte et une extrémité inférieure 5 présentant un passage 6,
- un réservoir d'eau 7 disposé dans le logement 3 et présentant un orifice 8 inférieur et une extrémité ouverte 9 supérieure,
- un système de diffusion 10 d'eau monté sur le réservoir d'eau 7, en communication avec son orifice 8,
- un couvercle 11 fermant l'extrémité ouverte 8 du réservoir d'eau 7.

L'enveloppe 2, en matière synthétique, comporte, comme illustré sur la figure 1, une paroi latérale 12 reliant entre elles les extrémités supérieure 4 et inférieure 5. La paroi latérale 12 comporte deux surfaces latérales 13 formant approximativement un angle de 90° l'une par rapport à l'autre. Les deux surfaces latérales 13 sont reliées l'une à l'autre par une surface intermédiaire 14 formant une troncature de l'angle formée par les deux surfaces latérales 13. Les surfaces latérales 13 présentent chacune un bord 15 opposé à l'angle. Les bords 15 des surfaces latérales 13 sont reliés par une portion courbée 16. La portion courbée 16 présente une section horizontale en forme générale d'arc de cercle.

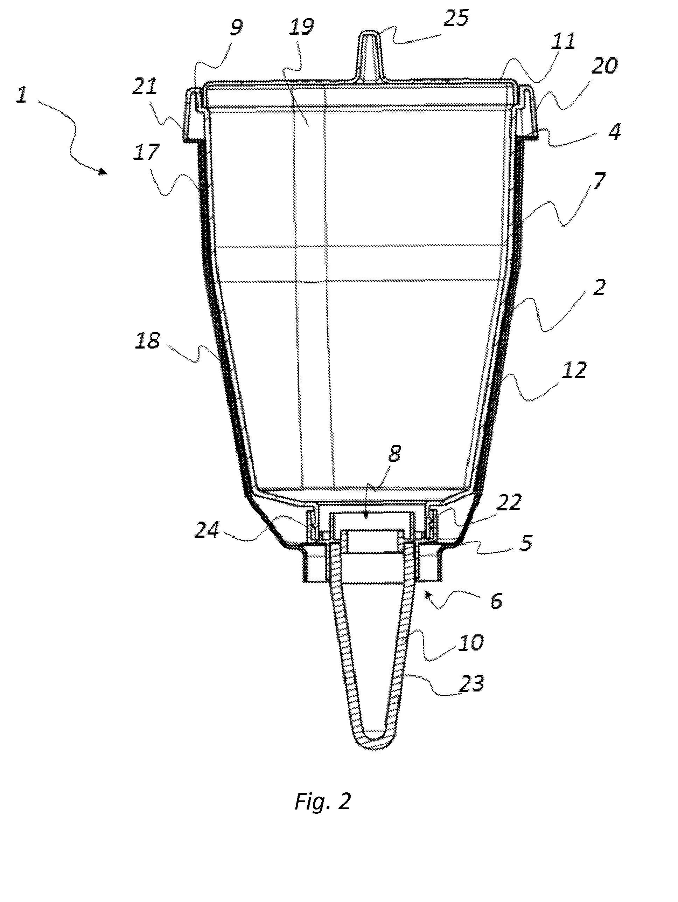

La paroi latérale 12 présente, comme illustré sur la figure 2, une première partie supérieure 17 présentant une section horizontale constante et une partie inférieure 18, dans la continuité de la partie supérieure 17, présentant une section horizontale dont la surface diminue continument en direction de l'extrémité inférieure 5.

La paroi latérale 12 présente des nervures/rainures de rigidification 19 sensiblement orientées verticalement.

Le passage 6 présent à l'extrémité inférieure 5 de l'enveloppe 2 est de forme circulaire pour permettre le passage du système de diffusion 10 d'eau.

La paroi latérale 12 délimite, avec les extrémités supérieure 4 et inférieure 5 de l'enveloppe extérieure 2, le logement pour le réservoir d'eau 7.

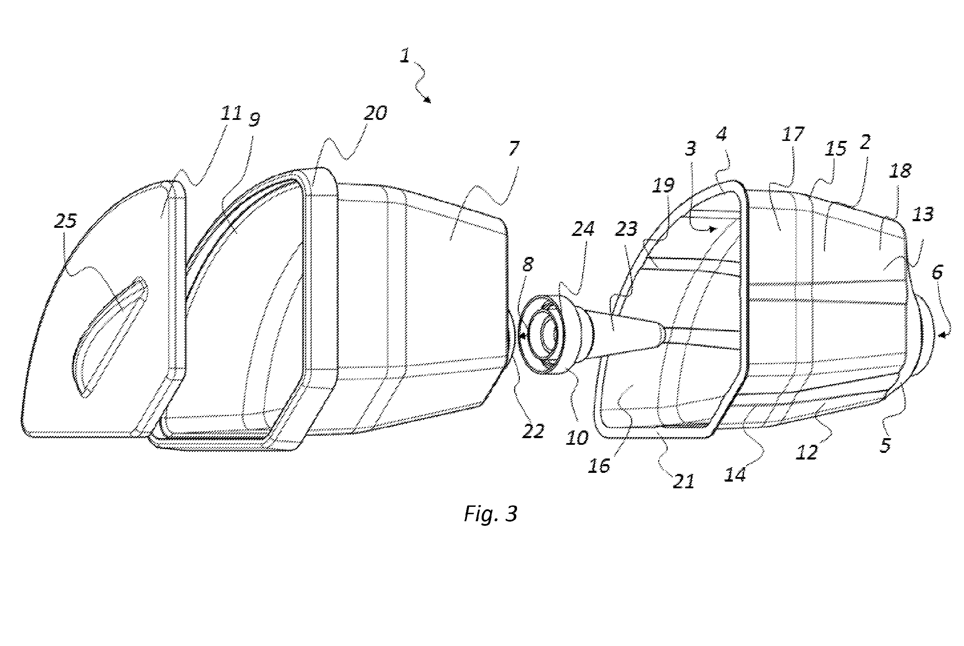

Le réservoir d'eau 7, également réalisé en matière synthétique, présente, comme illustré sur la figure 3, une forme complémentaire de celle du logement 3 de manière à y être reçu. Le réservoir d'eau 7 comporte, au niveau de l'extrémité ouverte 9 des retours 20 venant en appui sur des bords 21 de l'extrémité supérieure 4 de l'enveloppe 2.

Le réservoir d'eau 7 comporte une partie tubulaire filetée 22 autour de l'orifice 8 pour permettre la fixation du système de diffusion 10 d'eau.

Le système de diffusion 10 d'eau est un système de diffusion 10 d'eau similaire à celui décrit dans le document EP 1406480. Le système de diffusion 10 d'eau comporte une portion poreuse 23 de forme générale conique réalisée en céramique. Le système de diffusion 10 d'eau comporte en outre une partie tubulaire filetée 24 conformée pour coopérer avec la partie tubulaire filetée 22 du réservoir d'eau 7.

La partie tubulaire filetée 22 du réservoir d'eau 7 et la partie tubulaire filetée 24 du système de diffusion 10 d'eau forment respectivement le premier et le second moyens de fixation du système de diffusion 10 d'eau sur le réservoir d'eau 7.

Le couvercle 11 est agencé pour fermer l'extrémité ouverte 9 du réservoir d'eau 7. Le couvercle 11 présente une poignée de préhension 25 pour permettre sa manipulation.

L'installation du dispositif 1 peut être réalisée lors de la mise en terre d'une plante dans un récipient de culture R ou être réalisée ultérieurement dans un récipient de culture R déjà pourvu d'une ou plusieurs plantes.

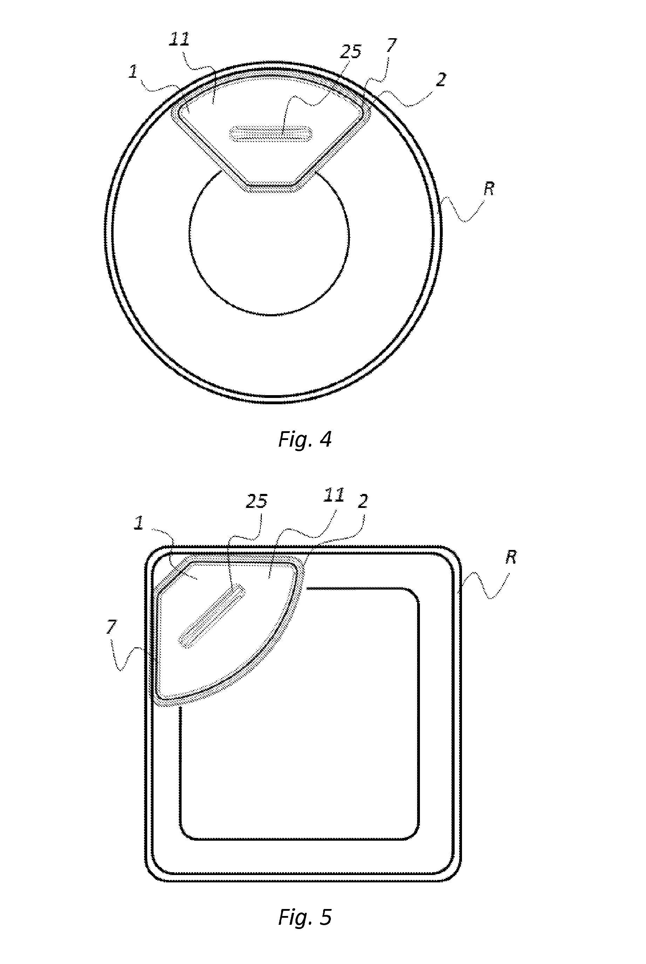

Dans le premier cas, le récipient de culture R est en partie rempli de terre de manière à ce que le dispositif 1 puisse reposer sur la terre. Dans le cas où le récipient de culture R présente une section horizontale circulaire, comme montré à la figure 4, le dispositif est positionné dans le récipient de culture R de manière à ce que la portion courbée 16 soit en appui sur la paroi interne du récipient et à ce que l'extrémité inférieure 5 de l'enveloppe extérieure 2 soit en appui sur la terre.

Dans le cas où le récipient présente une section rectangulaire ou carrée, comme montré sur la figure 5 le dispositif est positionné dans le récipient de culture R de manière à ce que chaque surface latérale 13 soit en appui sur l'un des côtés formant un angle du récipient et à ce que l'extrémité inférieure 5 de l'enveloppe extérieure 2 soit en appui sur la terre.

Ainsi le système de diffusion 10 d'eau, traversant le passage 6 ménagé à l'extrémité inférieure 5 de l'enveloppe extérieure 2, est en contact direct avec la terre. Le dispositif 1 en place, la plante peut être positionnée dans le récipient de culture R et le remplissage en terre du récipient de culture R complété de manière à laisser affleurer l'extrémité supérieure 4 de l'enveloppe extérieure 2.

Dans le cas ou l'installation est réalisée dans un récipient de culture R déjà pourvu d'une plante, une partie de la terre est retirée à l'emplacement prévu pour le dispositif 1. Le dispositif 1 est ensuite placé selon une position similaire à celle décrite dans le premier cas. Le dispositif 1 en place, une partie de la terre retirée est réintroduite dans le récipient de culture R pour enterrer le dispositif 1 de manière à laisser affleurer l'extrémité supérieure 4 de l'enveloppe extérieure 2.

Comme il va de soi, l'invention ne se limite pas à la seule forme d'exécution de ce dispositif d'arrosage, décrite ci-dessus à titre d'exemple, elle en embrasse au contraire toutes les variantes de réalisation. C'est ainsi notamment que le système de diffusion d'eau pourrait prendre une autre forme et comporter un système de type goutte à goutte différent d'une portion poreuse en forme de cône.

## Revendications

1. Dispositif (1) d'arrosage de plantes destiné à équiper un récipient de culture (R), tel qu'un pot, ledit dispositif (1) comprenant :
- une enveloppe (2) extérieure destinée à être disposée dans le récipient de culture (R) et à être au moins partiellement enterrée, ladite enveloppe (2) délimitant un logement (3) présentant une extrémité supérieure (4) ouverte destinée à dépasser ou à affleurer de la terre, et une extrémité inférieure (5) présentant un passage (6) dans la terre,
- un réservoir d'eau (7) disposé de façon amovible dans le logement (3) et présentant un orifice (8) autour duquel est ménagé un premier moyen de fixation,
- un système de diffusion (10) d'eau présentant un deuxième moyen de fixation complémentaire du premier moyen de fixation, de manière à fixer le système de diffusion (10) au réservoir d'eau (7) en communication avec l'orifice (8) du réservoir d'eau (7), ledit système de diffusion (10) étant agencé pour traverser le passage (6) de l'enveloppe (2),
l'enveloppe (2) présente une paroi latérale (12) qui, reliant les extrémités supérieure (4) et inférieure (5), présente :
- une portion courbée (16) possédant une section horizontale en forme générale d'arc de cercle,
**caractérisé en ce que** l'enveloppe présente
- une portion comportant au moins deux surfaces latérales (13), formant approximativement un angle de 90° l'une par rapport à l'autre, lesdites surfaces latérales (13) présentent chacune un bord (15) opposé à l'angle formé par lesdites surfaces (13), ces deux bords (15) étant reliés par la portion courbée (16).

2. Dispositif (1) selon la revendication 1, **caractérisé en ce que** le réservoir d'eau (7) présente une forme complémentaire de celle du logement (3) de l'enveloppe (2).

3. Dispositif (1) selon l'une des revendications 1 à 2, **caractérisé en ce que** le système de diffusion (10) d'eau présente une portion poreuse (23), par exemple en céramique.

4. Dispositif (1) selon la revendication 3, **caractérisé en ce que** la portion poreuse (23) présente une forme générale de cône.

5. Dispositif (1) selon l'une des revendications 1 à 4, **caractérisé en ce que** le premier et le deuxième moyens de fixation du dispositif (1) de diffusion d'eau sont amovibles.

6. Dispositif (1) selon la revendication 5, **caractérisé en ce que** le premier et le deuxième moyens de fixation comportent respectivement une partie tubulaire filetée (22) ménagée autour de l'orifice (8) du réservoir d'eau (7) et une partie tubulaire filetée (24) ménagée sur le système de diffusion (10) d'eau.

7. Dispositif (1) selon l'une des revendications 1 à 6, **caractérisé en ce que** l'enveloppe (2) présente une section horizontale dont la surface diminue sensiblement entre les extrémités supérieure (4) et inférieure (5).

8. Dispositif (1) selon l'une des revendications 1 à 7, **caractérisé en ce que** l'enveloppe (2) présente des nervures de rigidification (19) sensiblement orientées verticalement.

9. Dispositif (1) selon l'une des revendications 1 à 8, **caractérisé en ce que** le réservoir d'eau (7) présente une extrémité ouverte (9) et un couvercle (11) agencé pour fermer cette extrémité (9).

## Patentansprüche

1. Vorrichtung (1) zum Gießen von Pflanzen, die dazu bestimmt ist, ein Kulturgefäß (R) in der Art eines Topfes auszustatten, wobei die besagte Vorrichtung (1) folgendes umfasst:
- eine äußere Hülle (2), die dazu bestimmt ist, im Kulturgefäß (R) angeordnet, und zumindest teilweise eingegraben zu werden, wobei die besagte Hülle (2) eine Aufnahme (3) eingrenzt, die ein oberes offenes Ende (4) aufweist, das dazu bestimmt ist, aus der Erde herauszuragen oder leicht aus der Erde zum Vorschein zu kommen, und ein unteres Ende (5), das einen Durchlass (6) in der Erde aufweist,
- einen Wasserbehälter (7), der abnehmbar in der Aufnahme (3) angebracht ist und eine Öffnung (8) aufweist, um die ein erstes Befestigungsmittel angeordnet ist,
- ein Wasserabgabesystem (10), das ein zweites und zum ersten Befestigungsmittel ergänzendes Befestigungsmittel aufweist, sodass das Abgabesystem (10) in Verbindung mit der Öffnung (8) des Wasserbehälters (7) am Wasserbehälter (7) befestigt wird, wobei das Abgabesystem (10) angeordnet ist, um den Durchlass (6) der Hülle (2) zu durchqueren,
die Hülle (2) weist eine Seitenwand (12) auf, die das obere (4) mit dem unteren (5) Ende verbindet und folgendes aufweist:
- einen gekrümmten Abschnitt (16) der einen waagrechten Teilbereich aufweist, der eine allgemeine Form eines Kreisbogens aufweist,
**dadurch gekennzeichnet, dass** die Hülle einen Abschnitt mit zumindest zwei Seitenflächen (13) aufweist, die zueinander annährend einen Winkel von 90° bilden, wobei die beiden Seitenflächen (13) jeweils einen gegenüberliegenden Rand (15) in dem Winkel aufweisen, der durch die besagten Flächen (13) gebildet wird, wobei diese beiden Ränder (15) durch den gekrümmten Abschnitt (16) verbunden werden.

2. Vorrichtung (1) nach Anspruch 1, **dadurch gekennzeichnet, dass** der Wasserbehälter (7) eine ergänzende Form zu jener der Aufnahme (3) der Hülle (2) aufweist.

3. Vorrichtung (1) nach einem der Ansprüche 1 bis 2, **dadurch gekennzeichnet, dass** das Wasserabgabesystem (10) einen porösen Abschnitt (23), beispielsweise aus Keramik, aufweist.

4. Vorrichtung (1) nach Anspruch 3, **dadurch gekennzeichnet, dass** der poröse Abschnitt (23) eine allgemeine Kegelform aufweist.

5. Vorrichtung (1) nach einem der Ansprüche 1 bis 4, **dadurch gekennzeichnet, dass** das erste und das zweite Befestigungsmittel der Wasserabgabevorrichtung (1) abgenommen werden können.

6. Vorrichtung (1) nach Anspruch 5, **dadurch gekennzeichnet, dass** das erste und das zweite Befestigungsmittel jeweils einen rohrförmigen Abschnitt mit Gewinde (22) aufweisen, der um die Öffnung (8) des Wasserbehälters (7) angeordnet ist, und einen rohrförmigen Abschnitt mit Gewinde (24), der am Wasserabgabesystem (10) angeordnet ist.

7. Vorrichtung (1) nach einem der Ansprüche 1 bis 6, **dadurch gekennzeichnet, dass** die Hülle (2) einen waagrechten Teilbereich aufweist, dessen Oberfläche sich zwischen dem oberen (4) und dem unteren (5) Ende etwas verkleinert.

8. Vorrichtung (1) nach einem der Ansprüche 1 bis 7, **dadurch gekennzeichnet, dass** die Hülle (2) Versteifungsrippen (19) aufweist, die in etwa senkrecht ausgerichtet sind.

9. Vorrichtung (1) nach einem der Ansprüche 1 bis 8, **dadurch gekennzeichnet, dass** der Wasserbehälter (7) ein offenes Ende (9) und einen Deckel (11) aufweist, der angeordnet ist, um dieses Ende (9) zu verschließen.

## Claims

1. A plant-watering device (1) intended to equip a culture vessel (R), such as a pot, said device (1) comprising:
- an outer casing (2) intended to be disposed in the culture vessel (R) and to be at least partially buried, said casing (2) delimiting a housing (3) presenting an open upper end (4) intended to protrude from or to be flush with the ground, and a lower end (5) presenting a passage (6) in the ground,
- a water tank (7) removably disposed in the housing (3) and presenting an orifice (8) around which a first fixing means is arranged,
- a water diffusion system (10) presenting a second fixing means complementary to the first fixing means, so as to fix the diffusion system (10) to the water tank (7) in communication with the orifice (8) of the water tank (7), said diffusion system (10) being arranged to pass through the passage (6) of the casing (2),
the casing (2) presents a side wall (12) which, connecting the upper (4) and lower (5) ends, presents:
- a curved portion (16) having a horizontal section in the general shape of a circular arc,
**characterized in that** the casing presents
- a portion including at least two side surfaces (13), forming approximately a 90° angle to each other, said side surfaces (13) each presenting an edge (15) opposite to the angle formed by said surfaces (13), these two edges (15) being connected by the curved portion (16).

2. The device (1) according to claim 1, **characterized in that** that the water tank (7) presents a shape complementary to that of the housing (3) of the casing (2).

3. The device (1) according to any of claims 1 to 2, **characterized in that** the water diffusion system (10) presents a porous portion (23), for example made of ceramic.

4. The device (1) according to claim 3, **characterized in that** the porous portion (23) presents a general cone shape.

5. The device (1) according to any of claims 1 to 4, **characterized in that** the first and the second fixing means of the water diffusion device (1) are removable.

6. The device (1) according to claim 5, **characterized in that** the first and the second fixing means respectively include a threaded tubular part (22) arranged around the orifice (8) of the water tank (7) and a threaded tubular part (24) arranged on the water diffusion system (10).

7. The device (1) according to any of claims 1 to 6, **characterized in that** the casing (2) presents a horizontal section, the surface of which substantially decreases between the upper (4) and lower (5) ends.

8. The device (1) according to any of claims 1 to 7, **characterized in that** the casing (2) presents stiffening ribs (19) substantially oriented vertically.

9. The device (1) according to any of claims 1 to 8, **characterized in that** the water tank (7) presents an open end (9) and a cover (11) arranged to close this end (9).
